Europäisches Patentamt

(19) European Patent Office

Office européen des brevets

(11) Publication number : **0 576 198 A1**

## (12) EUROPEAN PATENT APPLICATION

(21) Application number : **93304693.0**

(22) Date of filing : **16.06.93**

(51) Int. Cl.⁵ : **C01B 31/02**

(30) Priority : **25.06.92 US 904805**

(43) Date of publication of application :
**29.12.93 Bulletin 93/52**

(84) Designated Contracting States :
**AT BE CH DE DK ES FR GB GR IE IT LI LU NL PT SE**

(71) Applicant : **ROHM AND HAAS COMPANY**
**Independence Mall West**
**Philadelphia Pennsylvania 19105 (US)**

(72) Inventor : **Rose, Philip Lawrence**
**18 Old Oaks Road**
**Rosemont, Pennsylvania 19101 (US)**
Inventor : **Lundquist, Eric Gustave**
**143 Longleat Drive**
**North Wales, Pennsylvania 19454 (US)**

(74) Representative : **Tanner, James Percival et al**
**ROHM AND HAAS (UK) LTD. European**
**Operations Patent Department Lennig House**
**2 Mason's Avenue**
**Croydon CR9 3NB (GB)**

(54) **Preparation of carbonaceous particles.**

(57) A method is provided for producing carbonaceous resins with superior physical properties that are particularly useful as ion exchange materials, adsorbents, catalysts and catalyst support systems. The carbonaceous resins are produced by heating a polymer obtained by polymerizing a monomer mixture comprising acrylonitrile, crosslinking agent and porogen.

EP 0 576 198 A1

The present invention is concerned with pyrolyzed particles of resinous polymers and a method for preparing the same. The present invention is further concerned with physically stable carbonaceous resins which are free of surface cracks and resist crushing.

One of the most commonly used adsorbents today is activated carbon. The production of activated carbon employs a wide variety of carbonaceous starting materials which are both natural and synthetic. Natural materials include peat, wood, bone, nutshells, coal and tar, etc. However, the suitability of such natural materials depends on a low ash content and the availability of the material in a uniform and unchanging quality. Synthetic starting materials have resolved some of the suitability problems of natural materials.

Synthetic starting materials such as polyvinyl chloride, polyfurfurylalcohol, phenol formaldehyde, modified styrene/ divinylbenzene copolymers and polyacrylonitrile have found wide use as starting materials for carbonaceous products. Pyrolysis of such materials allows a much greater control of the starting materials and, hence, of the final product than is possible with naturally occurring raw materials used for the production of activated carbons.

Japanese Patent Application J-59-4371 discloses a method for producing carbonized porous spheres. The porous spheres are obtained by reacting a crosslinking agent with a polyvinyl compound selected from styrene, acrylonitrile and lower alkyl esters of methacrylic or acrylic acid. During polymerization, a precipitating solvent or polymer is added and subsequently removed. The patent application discloses that the porous spheres are made into carbonized products by heat treatment that prevents fusion of the beads upon pyrolysis.

U.S. Patent No. 4,040,990 discloses partially pyrolyzed particles of a macroporous synthetic polymer derived from one or more ethylenically unsaturated monomers having at least 85 percent by weight of carbon, multimodal pore distribution and a carbon to hydrogen atom ratio of between 1.5:1 and 20:1.

Japanese Patent Application J-61-26505 discloses black particles produced by oxidizing acrylonitrile polymer particles at a temperature of 150-300 degrees Centigrade followed by heating at a temperature of 450 degrees Centigrade. The particles are made from an emulsion, suspension or sedimentation polymerization process to give particle sizes from 0.5 to 10 micrometers.

U.S. Patent No. 4,118,341 discloses a method of manufacturing activated carbon by thermally condensing a polymer of acrylonitrile between 150 and 500 degrees Centigrade for three hours in an oxidizing atmosphere and then heating to 550 to 950 degrees Centigrade in an atmosphere of steam or carbon dioxide.

A requirement for an effective carbonaceous adsorbent is a high surface area polymer having physical integrity and an available range of particle sizes and pore distributions.

We have now surprisingly found that polymers of acrylonitrile copolymerized with crosslinking agent and porogen produce carbonaceous products with superior physical properties. The pyrolysed carbonaceous polymers produced according to the method of the present invention possess a great deal of structural integrity. That is, they do not easily break apart, they are free of agglomeration and cracks, they are non-dusting, and they are resistant to crushing.

According to the present invention there is provided a method for producing carbonaceous particles having superior physical properties, which comprises heating a polymer obtained from copolymerizing a monomer mixture comprising acrylonitrile, crosslinking agent and porogen.

It has been found that the physical properties of carbonaceous products can be improved by the method of this invention. The physical properties are related to the amount of crosslinking agent and porogen employed in the polymerization process.

The carbonaceous products of the present invention find particular use as ion exchange materials, adsorbents, catalysts and in catalyst support systems.

The polymers used in the present invention can be easily processed into spheres using a suspension polymerization processes. The polymer spheres can then be carbonized by heating, for example in an inert atmosphere, at elevated temperatures.

The present invention provides pyrolyzed particles, preferably in the form of beads or spheres, produced by heating a polyacrylonitrile resin obtained from the polymerization, preferably the suspension polymerization, of a monomer mixture comprising, preferably in specific combinations, acrylonitrile, crosslinking agent and porogen.

In one embodiment the present invention provides pyrolyzed particles with superior crush resistance produced by heating a polyacrylonitrile resin obtained by suspension polymerization of a monomer mixture comprising, in specific combinations, acrylonitrile, crosslinking agent and porogen.

The acrylonitrile copolymer used in the present invention may be produced by any traditionally known emulsion, bulk or solution polymerization process. However, suspension polymerization, as further disclosed herein, is the preferred method for producing the acrylonitrile copolymer. The term "suspension polymerization" is a term well known to those skilled in the art and entails suspending droplets of the monomer or monomer mixture in a medium in which the monomer or monomer mixture is substantially insoluble. This may be accomplished by adding the monomer or monomer mix to a suspension medium containing a suspension stabilizing agent which, in the case of an aqueous suspension medium, may include the ammonium salt of styrenemaleic anhydride copolymer, carboxymethylcellulose, bentonite or a magnesium silicate dispersion. The medium is then agitated to form droplets. The size of the droplets depends in large part upon the agitation rate and the chemical nature of the monomer or monomer mixture and the suspension medium.

However, the process for manufacturing macroreticular products, such as described in U.S. Patent No. 4,224,415, can also be used to produce the polyacrylonitrile resin used in this invention and is, by this reference, incorporated herein. The process for producing the macroreticular products comprises polymerizing the monomers in the presence of a solvent in which the monomers are soluble but the polymer produced is insoluble.

Suitable oil-soluble catalysts which provide free radicals for initiation of the polymerization to produce the acrylonitrile polymers used in the present invention may be selected from benzoyl peroxide, tert-butyl hydroperoxide, cumene peroxide, tetralin peroxide, acetyl peroxide, caproyl peroxide, tert-butyl perbenzoate, tertbutyl diperphthalate and methyl ethyl ketone peroxide. Other suitable free radical generating catalysts are the azo compounds, for example, azodiisobutyronitrile, azodiisobutyramide, azobis ($\alpha,\alpha$-dimethylvaleronitrile), azobis($\alpha$-methylbutyronitrile), or dimethyl, diethyl or dibutyl azobis(methylvaleronitrile).

The initiators with half lives of six to ten hours below approximately 70 degrees centigrade are most preferred (e.g., azobis($\alpha,\alpha$-dimethylvaleronitrile), tertbutyl perpivalate, and bis (2,4-dichlorobenzoyl) peroxide). During polymerization, water (when present in the polymerization medium) and acrylonitrile form an azeotrope which is 88 weight percent acrylonitrile and has a boiling point of 71 degrees centigrade. If polymerization temperatures above 71 degrees centigrade are used, an acrylonitrile/water azeotrope will likely distill from the monomer droplets. This can cause problems with maintaining a good suspension throughout the suspension process.

Suitable crosslinking agents may be selected from: divinylbenzene; divinylpyridine; divinyltoluenes; divinylnaphthalenes; diallyl phthalate; ethylene glycol diacrylate; ethylene glycol dimethacrylate; divinylxylene; divinylethylbenzene; divinylsulfone; polyvinyl or polyallyl ethers of glycol, or glycerol, of pentaerythritol, of mono-, or dithioderivatives of glycols, and of resorcinol; divinylketone; divinylsulfide; allyl acrylate; diallyl maleate; diallyl fumarate; diallyl succinate; diallyl carbonate; diallyl malonate; diallyl oxalate; diallyl adipate; diallyl sebacate; triallyl tricarballylate; triallyl aconitate; triallyl citrate; triallyl phosphate; N,N'-methylenediacrylamide; 1,2-di($\alpha$-methylmethylene sufonamido)ethylene; trivinylbenzene; trivinylnaphthalene; polyvinylanthracenes; and trivinylcyclohexane.

Particularly preferred crosslinkers include the polyvinylaromatic hydrocarbons such as divinylbenzene, glycol di- and trimethacrylates, such as ethylene glycol dimethacrylate, and polyvinyl hydrocarbons such as trivinylcyclohexane. Because of its pyrolysis properties, the most preferred crosslinker is divinylbenzene. For example, the acrylates tend to decompose with heating and do not adequately maintain their crosslinking function, while divinylbenzene does not decompose as readily upon heating.

The chemical nature of the porogen affects the porosity developed in the copolymer as set forth in more detail herein. Copolymerization of acrylonitrile with increasing levels of crosslinker will alter the solubility of the growing polymer chain in the porogen and unpolymerized monomer mixture. The chemical nature of the porogen will also affect the nature of the precipitating copolymer and subsequent porosity formation which will, in turn, affect the physical strength of carbonaceous adsorbent products derived therefrom. The chemical nature of the porogen can be placed into two categories: those possessing a permanent dipole (polar porogens) and those not possessing a permanent dipole (non-polar porogens).

Suitable non-polar porogens may be selected from: cyclic aromatics including toluene, xylene and benzene, and higher saturated aliphatic hydrocarbons including hexane, heptane and isooctane as well as cyclic hydrocarbons such as cyclohexane. Preferred non-polar porogens include isooctane and toluene with isooctane as the most preferred non-polar porogen.

A porous copolymer derived from the polymerization, for example the suspension polymerization, of a monomer mixture comprising acrylonitrile, a minimum of 10% and a maximum of 40% crosslinker (calculated as a percent of the monomer charge), and a minimum of 15% and a maximum of 35% non-polar porogen (calculated as a percent of the total organic charge, i.e., acrylonitrile, crosslinker and porogen) is preferred for use as the starting material in the present invention. Within these limits, a minimum and maximum relationship exists for any combination of crosslinker and non-polar porogen so that the polymerization, for example the suspension polymerization, composition falls within the limits given above and the following relationship: minimum: % crosslinker = % porogen - 16 and maximum: % crosslinker = 2 (% porogen) - 9. When copolymers are made that are outside of the limits outlined above, the carbonaceous products produced by pyrolysis do not possess all of the superior physical properties detailed herein.

Suitable polar porogens may be selected from alkanols with four to ten carbon atoms including n-butanol, sec-butanol, 2-ethyl-hexanol, decanol, and 4-methyl-2-pentanol, alkyl esters having a carbon content of at least 7 including n-hexyl acetate, 2-ethylhexylacetate, methyl oleate, dibutyl sebacate, dibutyl adipate, and dibutyl carbonate, alkyl ketones having 4 to 10 carbons including diisobutyl ketone and methyl isobutyl ketone, and alkyl carboxylic acids such as hepatanoic acid. Preferred polar porogens include the alkanols and alkyl ketones, with 4-methyl-2-pentanol as the most preferred polar porogen.

A porous copolymer derived from the polymerization, for example the suspension polymerization, of acrylonitrile with a minimum of 10% and a maximum of 50% crosslinker (calculated as a percent of the monomer charge) and a minimum of 10% and a maximum of 50% polar porogen (calculated as a percent of the total organic charge, i.e., acrylonitrile, crosslinker and porogen) is preferred for use as the starting material in the present invention. Within these limits, a minimum and maximum relationship exists for any combination of crosslinker and polar porogen so that the polymerization, for example the suspension polymerization composition, falls within the limits given above and the following relationships: minimum: % crosslinker = .025 (% porogen) + 17.75 and maximum: % crosslinker = % porogen + 11. When copolymers are made that are outside of the limits outlined above, the carbonaceous products produced by pyrolysis do not possess all of the superior physical properties detailed in this invention.

In general, pyrolysis requires subjecting polyacrylonitrile copolymer to elevated temperatures for controlled periods of time under ambient conditions. The temperature for carrying out the pyrolysis of this invention may range from about 180 degrees centigrade to about 1000 degrees centigrade, preferably from 180 degrees centigrade to about 850 degrees centigrade, and more preferably from 180 degrees centigrade to 750 degrees centigrade.

The pyrolysis may be conducted in a non-oxidizing environment, preferably a non-oxidizing environment which is selected from nitrogen, other inert gases, and mixtures thereof.

Pyrolysis of polyacrylonitrile is accompanied by a loss of gaseous and condensable by-products, such as cyanogen, acrylonitrile, acetonitrile, vinylacetonitrile, hydrogen cyanide, benzene, toluene, pyridine, 3- and 4-methylpyridines, 1,3,5-triazine, hydrogen, pyrrole, butyronitrile, propionitrile, 3,6-dimethyl-1,8-naphthyridine, ammonia and water. These by-products can fracture and break down the polymer matrix if there is no available means to accommodate their release. In order to accommodate the release of such volatile compounds during pyrolysis, polyacrylonitrile copolymers should preferably possess a minimum amount of porosity. It has been determined that without the preferred balance of porogen and crosslinker, the product of porogen, crosslinker and acrylonitrile will have insufficient porosity to handle the expulsion of by-products given off during pyrolysis or will have inadequately formed polymer chains, resulting in a carbonaceous product having cracked or brittle beads. It is the synergistic relationship of the levels of porogen and of crosslinker preferably used during the polymerization process which results in carbonaceous products having the desired improved physical properties.

The following is an example of a general procedure for producing carbonaceous particles according to the present invention:

150 grams of organic phase composed of acrylonitrile, a porogen and a suitable crosslinker with the above-specified concentrations and an oil soluble, free-radical initiator (from 0.01% to 3.0% of the monomer phase, preferred range from 0.2% to 1.5%) were added to a 1 liter round-bottom flask equipped with a condenser, mechanical stirrer and thermocouple and filled with 300 grams of an aqueous phase containing a suspension stabilizing agent. The two-phase mixture was stirred to form organic droplets suspended in the aqueous phase. The temperature was raised to form radicals and initiate the polymerization of the monomers in the organic droplet. After polymerization, the resin beads were washed and dried.

25 grams of the above copolymer were placed in a quartz tube which was placed in a vertically oriented pyrolysis oven. A stream of air was flowed downward over the sample at 60 cc/minute. The sample was heated from room temperature to 180°C at 5°C/minute and held for 30 minutes, from 180-220°C at 1°C/minute and held for 12 hours. The sample was cooled to room temperature. The atmosphere was changed from air to nitrogen, and the sample was heated from room temperature to 180°C at 5°C/minute, from 180-220°C at 1°C/minute and from 220-850°C at 10°C/minute and held for 30 minutes. The sample was cooled to room temperature to yield 30 grams of carbonaceous resin with a nitrogen BET surface area of 1200 square meters per gram and a Chatillon crush strength greater than 3 kilograms.

The following Examples are presented to illustrate certain embodiments of the present invention.

Example 1

261.32 grams of an aqueous phase containing a suitable suspension stabilizing agent were placed in a 4-neck, 1 liter round-bottom flask equipped with a nitrogen inlet port, overhead stirrer, condenser and thermocouple. To this was added 78.94 grams of acrylonitrile, 43.86 grams of divinylbenzene (56% divinylbenzene and 44% ethylvinylbenzene), 30.70 grams 4-methyl-2-pentanol and 1.22 grams 2,2'azobis(2,4-dimethylvaleronitrile). The two-phase system was stirred at 130 rpm, heated to 55°C and held for 10 hours. The 4-methyl-2-pentanol was stripped from the resin via distillation and the resin was washed several times with DI water and dried in a vacuum oven at 60°C for 12 hours.

5 grams of the dried resin was placed in a 2.54 cm (1") O.D. quartz tube which was mounted in a vertically oriented pyrolysis oven. A stream of air was flowed downward over the sample at 35 cc/minute. The sample was heated from room temperature to 180°C at 5°C/minute and held for 30 minutes, from 180-220°C at 1°C/minute and held for 12 hours. The sample was cooled to room temperature. The atmosphere was changed from air to nitrogen and the sample was heated from room temperature to 180°C at 5°C/minute, from 180-220°C at 1°C/minute and from 220-750°C at 10°C/minute and held for 30 minutes. An excess of water vapor was introduced at 750°C for an additional 30 minutes. The sample was cooled to room temperature to yield 2.22 grams of carbonaceous resin with a Chatillon crush strength greater than 3 kilograms.

Example 2

261.03 grams of an aqueous phase containing a suitable suspension stabilizing agent were placed in a 4-neck, 1 liter round-bottom flask equipped with a nitrogen inlet port, overhead stirrer, condenser and thermocouple. To this was added 95.52 grams of acrylonitrile, 34.95 grams of divinylbenzene (56% divinylbenzene and 44% ethylvinylbenzene), 23.03 grams 4-methyl-2-pentanol and 1.305 grams 2,2'azobis(2,4-dimethylvaleronitrile). The two-phase system was stirred at 130 rpm, heated to 55°C and held for 10 hours. The 4-methyl-2-pentanol was stripped from the resin via distillation and the resin was washed several times with DI water and dried in a vacuum oven at 60°C for 12 hours.

5 grams of the dried resin was placed in a 2.54 cm (1") O.D. quartz tube which was mounted in a vertically oriented pyrolysis oven. A stream of air was flowed downward over the sample at 35 cc/minute. The sample was heated from room temperature to 180°C at 5°C/minute and held for 30 minutes, from 180-220°C at 1°C/minute and held for 12 hours. The sample was cooled to room temperature. The atmosphere was changed from air to nitrogen and the sample was heated from room temperature to 180°C at 5°C/minute, from 180-220°C at 1°C/minute and from 220-750°C at 10°C/minute and held for 30 minutes. An excess of water vapor was introduced at 750°C for an additional 30 minutes. The sample was cooled to room temperature to yield 2.98 grams of carbonaceous resin with a Chatillon crush strength greater than 3 kilograms.

Example 3

262.5 grams of an aqueous phase containing a suitable suspension stabilizing agent were placed in a 4-neck, 1 liter round-bottom flask equipped with a nitrogen inlet port, overhead stirrer, condenser and thermocouple. To this was added 94.66 grams of acrylonitrile, 54.09 grams of divinylbenzene (56% divinylbenzene and 44% ethylvinylbenzene), 26.25 grams 2,2,4-trimethylpentane and 1.48 grams 2,2'-azobis(2,4-dimethylvaleronitrile). The two-phase system was stirred at 125 rpm, heated to 55°C and held for 10 hours. The 2,2,4-trimethylpentane was stripped from the resin via distillation and the resin was washed several times with DI water and dried in a vacuum oven at 60°C for 12 hours.

5.03 grams of the dried resin was placed in a 2.54 cm (1") O.D. quartz tube which was mounted in a vertically oriented pyrolysis oven. A stream of air was flowed downward over the sample at 35 cc/minute. The sample was heated from room temperature to 180°C at 5°C/minute and held for 30 minutes, from 180-220°C at 1°C and held for 12 hours. The sample was cooled to room temperature. The atmosphere was changed from air to nitrogen and the sample was heated from room temperature to 180°C at 5°C/minute, from 180-220°C at 1°C/minute and from 220-750°C/minute and held for 30 minutes. An excess of water vapor was introduced at 750°C for an additional 30 minutes. The sample was cooled to room temperature to yield 1.67 grams of carbonaceous resin with a Chatillon crush strength greater than 2.5 kilograms.

Example 4

262.5 grams of an aqueous phase containing a suitable suspension stabilizing agent were placed in a 4-neck, 1 liter round-bottom flask equipped with a nitrogen inlet port, overhead stirrer, condenser and thermocouple. To this was added 108.18 grams of acrylonitrile, 40.57 grams of divinylbenzene (56% divinylbenzene and 44% ethylvinylbenzene), 26.5 grams 2,2,4-trimethylpentane and 1.48 grams 2,2'azobis(2,4-dimethylvaleronitrile). The two-phase system was stirred at 115 rpm, heated to 55°C and held for 10 hours. The 2,2,4-trimethylpentane was stripped from the resin via distillation and the resin was washed several times with DI water and dried in a vacuum oven at 60°C for 12 hours.

5.01 grams of the dried resin was placed in a 2.54 cm (1") O.D. quartz tub which was mounted in a vertically oriented pyrolysis oven. A stream of air was flowed downward over the sample at 35 cc/minute. The sample was heated from room temperature to 180°C at 5°C/minute and held for 30 minutes, from 180-220°C at 1°C/minute and held for 12 hours. The sample was cooled to room temperature. The atmosphere was changed from air to nitrogen and the sample was heated from room temperature to 180°C at 5°C/minute, from 180-220°C at 1°C/minute and from 220-750°C at 10°C/minute and held for 30 minutes. An excess of water vapor was introduced at 750°C for an additional 30 minutes. The sample was cooled to room temperature to yield 2.06 grams of carbonaceous resin with a Chatillon crush strength greater than 2.5 kilograms.

Example 5

261.03 grams of an aqueous phase containing a suitable suspension stabilizing agent were placed in a 4-neck, 1 liter round-bottom flask equipped with a nitrogen inlet port, overhead stirrer, condenser and thermocouple. To this was added 107.18 grams of acrylonitrile, 23.29 grams of divinylbenzene (56% divinylbenzene and 44% ethylvinylbenzene), 23.03 grams 4-methyl-2-pentanol and 1.305 grams 2,2'azobis(2,4-dimethylvaleronitrile). The two-phase system was stirred at 130 rpm, heated to 55°C and held for 10 hours. The 4-methyl-2-phenol was stripped from the resin via distillation and the resin was washed several times with DI water and dried in a vacuum oven at 60°C for 12 hours.

5 grams of the dried resin was placed in a 2.54 cm (1") O.D. quartz tube which was mounted in a vertically oriented pyrolysis oven. A stream of air was flowed downward over the sample at 35 cc/minute. The sample was heated from room temperature to 180°C at 5°C/minute and held for 30 minutes, from 180-220°C at 1°C/minute and held for 12 hours. The sample was cooled to room temperature. The atmosphere was changed from air to nitrogen and the sample was heated from room temperature to 180°C at 5°C/minute, from 180-220°C at 1°C/minute and from 220-750°C at 10°C/minute and held for 30 minutes. An excess of water vapor was introduced at 750°C for an additional 30 minutes. The sample was cooled to room temperature to yield 2.47 grams of carbonaceous resin with a Chatillon crush strength of 0.28 kilograms.

Example 6

The effect of porogen and crosslinking agent on the crush strength of carbonaceous adsorbents derived from polyacrylonitrile resins are given below in Table 1. The Table illustrates combinations of porogen and crosslinker resulting in strong (>2 kg) and weak (<2 kg) carbonaceous resins.

## Table 1

| Polar Porogen wt% 4-methyl-2-pentanol(a) | Crosslinker wt% divinylbenzene(b) | Chatillon Measurement (kg) |
|---|---|---|
| 35 | 15 | 2.90±0.24* |
| 15 | 10 | 0.28±0.13 |
| 20 | 10 | 0.44±0.35 |
| 25 | 10 | 0.30±0.25 |
| 15 | 15 | >3* |
| 15 | 30 | 0.15±0.06 |
| 10 | 25 | 0.43±0.16 |
| 10 | 20 | 2.30±0.35* |
| 20 | 30 | >3* |
| 25 | 40 | >3* |
| 5 | 20 | 0.19±0.07 |
| 20 | 20 | >3* |

(a) Weight percent based on weight of monomer, crosslinker and porogen.
(b) Weight percent based on weight of monomer and crosslinker.

The measurements marked with an asterix are for resins which fall within the preferred porogen and crosslinking amounts previously mentioned and which give rise to a synergistic effect. While the resins not marked with an asterix make viable copolymer - they do not give physically strong carbonaceous resins upon pyrolysis.

## Claims

1. A method for producing carbonaceous particles having superior physical properties, which comprises heating a polymer obtained by copolymerizing a monomer mixture comprising acrylonitrile, crosslinking agent and porogen.

2. A method as claimed in claim 1, wherein the crosslinking agent is selected from divinylbenzene, divinylpyridine, divinyltoluenes, divinylnaphthalenes, diallyl phthalate, ethylene glycol diacrylate, ethylene glycol dimethacrylate, divinylxylene, divinylethylbenzene, divinylsulfone, polyvinyl or polyallyl ethers of glycol, or glycerol, of pentaerythritol, of mono-, or dithioderivatives of glycols, and of resorcinol; divinylketone, divinylsulfide, allyl acrylate, diallyl maleate, diallyl fumarate, diallyl succinate, diallyl carbonate, diallyl malonate, diallyl oxalate, diallyl adipate, diallyl sebacate, triallyl tricarballylate, triallyl aconitate, triallyl citrate, triallyl phosphate, N,N'-methylenediacrylamide, 1,2-di($\alpha$-methylmethylene sufonamido)ethylene, trivinyl-benzene, trivinylnaphthalene, polyvinylanthracenes and trivinylcyclohexane.

3. A method as claimed in claim 2, wherein the crosslinking agent is selected from divinylbenzene, glycol trimethacrylates, ethylene glycol dimethacrylate, trivinylcyclohexane.

4. A method as claimed in any of claims 1 to 3, wherein the porogen comprises polar porogen.

5. A method as claimed in claim 4, wherein the polar porogen is selected from n-butanol, sec-butanol, 2-ethyl-hexanol, decanol, 4-methyl-2-pentanol, alkyl esters having a carbon content of at least 7 including n-hexyl acetate, 2-ethylhexylacetate, methyl oleate, dibutyl sebacate, dibutyl adipate, dibutyl carbonate, alkyl ketones, diisobutyl ketone, methyl isobutyl ketone, and alkyl carboxylic acids.

6. A method as claimed in claim 4 or claim 5, wherein the concentration of the crosslinking agent is from about 10 percent to about 50 percent, based on the weight of the monomers, and the concentration of the polar porogen is from about 10 to about 50 percent, based on the weight of the acrylonitrile, crosslinker and porogen.

7. A method as claimed in any of claims 1 to 3, wherein the porogen comprises non polar porogen.

8. A method as claimed in claim 7, wherein the non-polar porogen is selected from toluene, xylene and benzene, hexane, heptane and cyclohexane.

9. A method as claimed in claim 7 or claim 8, wherein the concentration of the crosslinking agent is from about 10 percent to about 40 percent, based on the weight of the monomers, and the concentration of the non polar porogen is from about 15 to about 35 percent, based on the weight of the acrylonitrile, crosslinker and porogen.

10. A method as claimed in any preceding claim, wherein the polyacrylonitrile is pyrolyzed at a temperature of from about 180 degrees centigrade to about 1000 degrees centigrade, preferably from about 180 degrees centigrade to about 750 degrees centigrade.

11. A method as claimed in any preceding claim, wherein the pyrolysis is conducted in a non-oxidizing environment, preferably a non-oxidizing environment which is selected from nitrogen, other inert gases, and mixtures thereof.

12. Use of carbonaceous particles, prepared by the method as claimed in any of claims 1 to 11, as an ion exchange material, adsorbent, catalyst or in a catalyst support system.

EP 0 576 198 A1

European Patent Office

EUROPEAN SEARCH REPORT

Application Number

EP 93 30 4693

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| A,D | US-A-4 118 341 (ISHIBASHI ET AL) <br> * claim 1 * <br> --- | 1 | C01B31/02 |
| A,D | DATABASE WPI <br> Week 8408, <br> Derwent Publications Ltd., London, GB; <br> AN 77-72940Y <br> & JP-B-59 004 371 (MITSUBISHI CHEM IND KK) <br> * abstract * <br> --- | 1 | |
| A,D | PATENT ABSTRACTS OF JAPAN <br> vol. 10, no. 178 (C-355)(2234) 21 June 1986 <br> & JP-A-61 26 505 ( TORAY IND INC ) <br> * abstract * <br> ----- | 1 | |
| | | | **TECHNICAL FIELDS SEARCHED (Int. Cl.5)** <br><br> C01B |

The present search report has been drawn up for all claims

| Place of search | Date of completion of the search | Examiner |
|---|---|---|
| BERLIN | 23 SEPTEMBER 1993 | CLEMENT J-P. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)

9